# DEMANDE DE BREVET EUROPEEN

(11) **EP 1 686 394 A1**
(43) Date de publication de la demande: **02.08.2006**
(21) Numéro de dépôt: 06100721.7
(22) Date de dépôt: 23.01.2006
(51) Int. Cl.: G01S 13/87, G01S 13/78

(54) **Procédé de couplage électromagnétique entre un radar en bande L et un équipement de radionavigation et dispositif d'autoprotection et de radionavigation**

(30) Priorité: 28.01.2005 FR 0500894
(71) Demandeur: THALES, 92200 Neuilly sur Seine (FR)
(72) Inventeur: Leiras, Carlos, 92100 Boulogne Billancourt (FR)
(74) Mandataire: Lucas, Laurent Jacques

(57) **Abrégé**

La présente invention se rapporte à un procédé de couplage électromagnétique entre un radar et un équipement de radionavigation.

L'équipement de radionavigation étant en fonctionnement, le radar émet périodiquement dans tout ou partie de la bande de fréquence puis stoppe ses émissions, chaque émission :
- ayant un intervalle d'une durée donnée,
- étant séparé de l'émission précédente par un intervalle de silence d'une durée donnée.

L'invention a également pour objet un dispositif d'autoprotection et de radionavigation équipant un porteur mettant en oeuvre le procédé de couplage selon l'invention. L'invention s'applique au couplage électromagnétique entre un équipement de radionavigation aéronautique appelé DME (Distance Measurement Equipment) et un radar travaillant sur la bande de fréquence L, embarqués sur un même porteur.

## Description

L'invention concerne un procédé de couplage électromagnétique entre un radar en bande L et un équipement de radionavigation ainsi qu'un dispositif d'autoprotection et de radionavigation. En particulier, l'invention s'applique au couplage électromagnétique entre un équipement de radionavigation aéronautique appelé DME (Distance Measurement Equipment) et un radar travaillant par exemple sur la bande de fréquence L, embarqués sur un même porteur.

Afin de protéger les avions civils ou militaires notamment de tirs hostiles de missiles sol-air, ces porteurs embarquent des systèmes d'autoprotection mettant en oeuvre comme moyen de détection des radars doppler travaillant en bande L, adaptés à la détection et à la classification de ces menaces. Or certains porteurs, tout particulièrement les avions commerciaux, utilisent un équipement de radionavigation appelé DME (Distance Measurement Equipment) travaillant dans la même bande de fréquence. L'équipement de radionavigation DME peut être brouillé par les émissions du radar en bande L. Suivant les configurations des antennes de ces deux équipements, le brouillage engendré par le fonctionnement du radar peut empêcher le DME d'être opérationnel.

Pour contourner ce problème, une solution consiste à adapter l'équipement de radionavigation DME ainsi que le système d'autoprotection de telle sorte que chaque équipement soit en mesure de se synchroniser sur les émissions de l'autre, en émettant par exemple alors que l'autre équipement est silencieux. Outre la détermination d'un équipement prioritaire et maître par rapport à l'autre, se pose le problème de modifier l'équipement de radionavigation DME déjà installé sur les porteurs afin qu'il puisse recevoir un nouveau signal extérieur de compatibilité et de synchronisation. Une telle modification nécessite de faire certifier à nouveau l'équipement de radionavigation DME, engendrant un surcoût important.

Une autre solution réside dans l'optimisation du positionnement et de la directivité des antennes du radar en bande L par rapport aux antennes de l'équipement de radionavigation DME. En augmentant la directivité des antennes et en les positionnant de telle sorte que les antennes du radar ne soient pas en vue des antennes de l'équipement de radionavigation DME, le risque de brouillage est réduit. Toutefois, cette solution augmente les zones non couvertes par le radar bande L. De plus, contrairement aux avions militaires, l'intégration d'équipements sur les avions commerciaux peut difficilement se faire hors de quelques zones bien définies et limitées.

L'invention a notamment pour but de pallier les inconvénients précités. A cet effet, l'invention a pour objet un procédé de couplage électromagnétique entre au moins un équipement de radionavigation émettant dans une bande de fréquence et au moins un radar travaillant dans une même bande de fréquence. L'équipement de radionavigation étant en fonctionnement, le radar émet périodiquement dans tout ou partie de la bande de fréquence puis stoppe ses émissions, chaque émission :
- ayant un intervalle d'une durée donnée,
- étant séparé de l'émission précédente par un intervalle de silence d'une durée donnée.

L'instant de démarrage de chaque émission, la durée de chaque émission ainsi que la durée de chaque intervalle de silence sont définies a priori. La bande de fréquence dans laquelle émettent l'équipement de radionavigation et le radar est par exemple la bande L. L'équipement de radionavigation peut être un équipement de mesure de distance (DME). La durée d'émission du radar peut être de 125 ms avec un intervalle de tolérance de +/- 10% et la durée d'un silence du radar peut être de 125 ms avec un intervalle de tolérance de +/- 10%.

L'invention a aussi pour objet un dispositif d'autoprotection et de radionavigation équipant un porteur. Ce dispositif comporte :
- au moins un équipement de radionavigation émettant dans une bande de fréquence ;
- au moins un système d'autoprotection comportant un radar émettant périodiquement dans tout ou partie d'une même bande de fréquence puis stoppant ses émissions, chaque émission :
   o ayant un intervalle d'une durée donnée,
   o étant séparé de l'émission précédente par un intervalle de silence d'une durée donnée.

L'instant de démarrage de chaque émission, la durée de chaque émission ainsi que la durée de chaque intervalle de silence sont définies a priori. La bande de fréquence dans laquelle émettent l'équipement de radionavigation et le radar est par exemple la bande L. L'équipement de radionavigation peut être un équipement de mesure de distance (DME). La durée d'émission du radar peut être de 125 ms avec un intervalle de tolérance de +/- 10%. La durée d'un silence entre deux émissions du radar peut être de 125 ms avec un intervalle de tolérance de +/- 10%.

Les antennes du radar peuvent être positionnées par exemple sur le porteur dans la zone de couverture des antennes de l'équipement de radionavigation.

Le porteur peut être un avion, un hélicoptère ou un drône.

L'invention a notamment pour avantages qu'elle permet d'intégrer aux porteurs existant et notamment aux avions commerciaux un système d'autoprotection, sans modification matérielle des équipements de radionavigation existant comme les équipements de mesure de distance DME. De plus, le système d'autoprotection peut fonctionner parallèlement aux équipements de radionavigation sans dégrader sensiblement ses performances.

D'autres caractéristiques et avantages de l'invention apparaîtront à l'aide de la description qui suit faite en regard des dessins annexés qui représentent :
- la figure 1, une solution de cohabitation entre un équipement de radionavigation DME et un système d'autoprotection comportant un radar en bande L selon l'état de l'art ;
- la figure 2, les fenêtres d'émissions de l'équipement de radionavigation DME et du radar en bande L du système d'autoprotection, selon l'état de l'art ;
- la figure 3, la cohabitation entre un équipement de radionavigation DME et un système d'autoprotection comportant un radar en bande L avec la mise en oeuvre du procédé selon l'invention ;
- la figure 4, les fenêtres d'émissions de l'équipement de radionavigation DME et du radar en bande L du système d'autoprotection, avec la mise en oeuvre du procédé selon l'invention ;
- la figure 5, un exemple d'intégration sur un avion commercial d'un système d'autoprotection d'un radar bande L et d'un équipement de radionavigation DME.

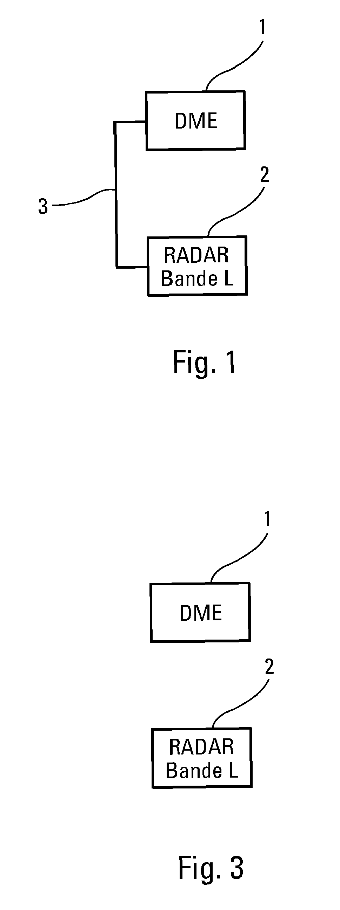

La figure 1 illustre une solution de cohabitation entre un équipement de radionavigation DME et un système d'autoprotection comportant un radar en bande L. Parmi les équipements de radionavigations embarqués sur les avions commerciaux figurent un équipement de mesure de distance, désigné par l'abréviation anglo-saxonne DME. Cet équipement de radionavigation permet de donner la distance entre un aéronef et des balises DME situées au sol. Dans son principe de fonctionnement, l'équipement de radionavigation DME émet des trains d'impulsions codées dans une gamme de fréquence s'étalant de 962 MHz à 1213 MHz, soit une partie de la bande L. Cet équipement figure parmi la liste des équipements critiques quant à la sécurité du porteur, et à ce titre doit être certifié par les autorités compétentes.

L'installation d'un radar en bande L dans le cadre de la mise en oeuvre d'un système d'autoprotection a mis en lumière l'incompatibilité d'un fonctionnement simultané d'un tel dispositif et d'un équipement de radionavigation DME. De plus, l'intégration au porteur d'un tel système est soumise aux contraintes suivantes :
- les performances en détection et classification du radar du système d'autoprotection sont conditionnées par la disposition adéquate des antennes qui le composent afin de maximiser la couverture ;
- les places disponibles sur certains porteurs comme les avions commerciaux sont peu nombreuses.

On revient à la figure 1. Une liaison 3 entre un équipement de radionavigation DME 1 et un radar en bande L 2 compris dans le système d'autoprotection assure la transmission d'un signal de compatibilité et de synchronisation des émissions entre les deux équipements. Le signal permet de déterminer quel équipement est autorisé à émettre, pendant que l'autre reste silencieux. Des fenêtres temporelles, c'est-à-dire des intervalles temporels durant lesquels un équipement est autorisé à émettre, sont ainsi définies pour l'équipement de radionavigation DME 1 et pour le radar en bande L 2 du système d'autoprotection.

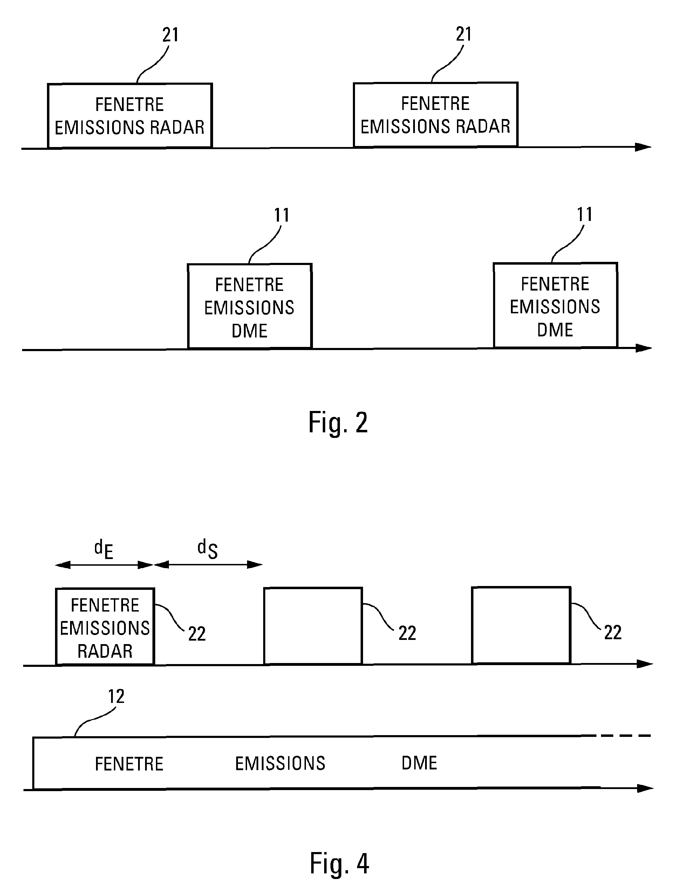

La figure 2 correspondant au mode de couplage présenté sur la figure 1 montre sur une échelle des temps :
- des fenêtres temporelles 21 durant lesquelles le radar 2 est autorisé à émettre ;
- des fenêtres temporelles 11 durant lesquelles l'équipement de radionavigation DME 1 est autorisé à émettre.

Aussi les fenêtres 21 et 11 ne se chevauchent pas dans le temps, du fait du signal de synchronisation. Les équipements 1, 2 peuvent ainsi fonctionner sans perturbations mutuelles.

Toutefois, l'équipement de radionavigation DME 1 étant un équipement répandu et installé sur un grand nombre de porteurs, une modification pour prendre en compte le signal de compatibilité passant par la liaison 3 nécessite de faire certifier à nouveau l'équipement, entraînant un surcoût important.

La figure 3 illustre la cohabitation entre un équipement de radionavigation DME 1 et un système d'autoprotection comportant un radar en bande L 2 avec la mise en oeuvre du procédé selon l'invention. A la différence de la figure 1, aucun signal de compatibilité ne véhicule entre l'équipement de radionavigation DME 1 et le radar en bande L 2 du système d'autoprotection, l'équipement de radionavigation DME 1 émettant librement. L'équipement de radionavigation DME 1 et le radar en bande L 2 fonctionnent indépendamment l'un de l'autre.

La figure 4 illustre par deux diagrammes temporels un mode de couplage selon l'invention, ces diagrammes montrant sur une échelle des temps :
- des fenêtres temporelles 22 durant lesquelles le radar 2 est autorisé à émettre ;
- des fenêtres temporelles 12 durant lesquelles l'équipement de radionavigation DME 1 est autorisé à émettre.

La fenêtre 12 est illimitée, l'équipement de radionavigation DME 1 émet ainsi librement. Afin de permettre à l'équipement de radionavigation DME 1 de fonctionner, des plages de silence s'intercalent entre chaque fenêtre temporelle 22 d'émission du radar 2. Le paramétrage des plages de silence et de la durée des fenêtres temporelles 22 est effectué a priori par configuration, et n'a pas besoin d'évoluer dynamiquement.

Par exemple, l'expérimentation montre que l'étendue de la fenêtre d'émission 22 pour le radar 2 noté dE peut être configurée a priori à 125 ms avec un intervalle de tolérance de +/- 10% et la durée entre deux fenêtres d'émission 22 notée dₛ à 125 ms avec un intervalle de tolérance de +/- 10%.

Cette configuration permet non seulement d'atteindre les performances radar 2 nécessaires pour détecter et classifier les menaces, mais aussi de préserver le fonctionnement de l'équipement de radionavigation DME 1 sans modification.

Les phases d'émission et de silence du radar 2 sont par exemple définies dans un logiciel embarqué du radar 2.

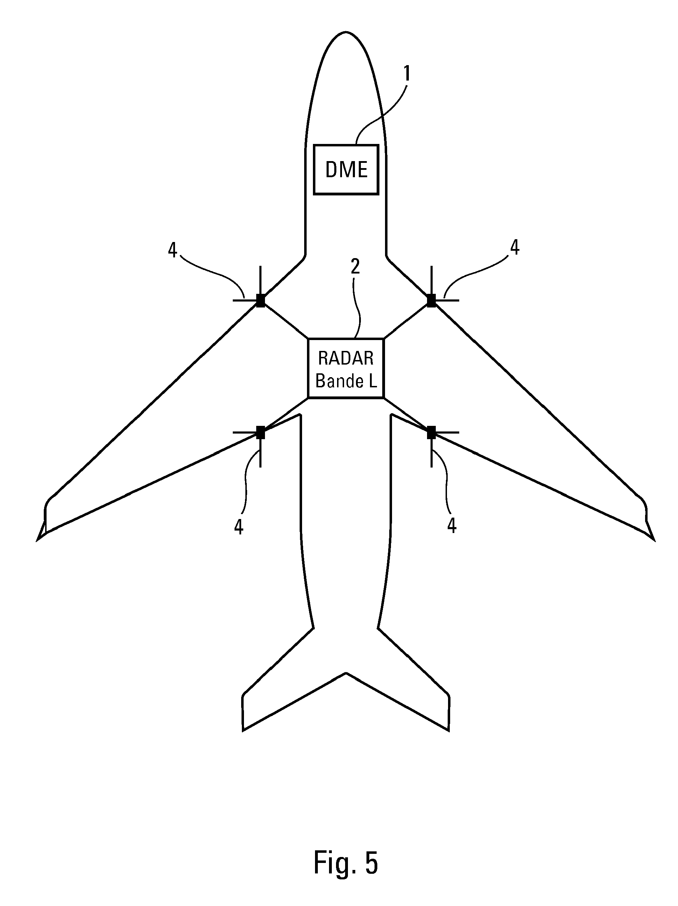

La figure 5 montre sur un avion commercial un exemple d'intégration :
- d'un dispositif d'autoprotection mettant en oeuvre notamment des moyens de détection de menaces comme les missiles sol-air ;
- et d'un équipement de radionavigation ;

Plus particulièrement, la figure 5 illustre un système d'autoprotection comportant notamment un radar bande L 2 ainsi que ses antennes 4 et un équipement de mesure de distance 1, par exemple un équipement de radionavigation DME, avec la mise en oeuvre du procédé de couplage selon l'invention. Aucun mécanisme de synchronisation des émissions n'est mis en oeuvre entre le radar en bande L 2 du système d'autoprotection et l'équipement de radionavigation DME 1.

L'équipement de radionavigation DME 1 émet librement alors que les périodes d'émissions 22 du radar en bande L 2 du système d'autoprotection sont suivies de plages de silence conformément par exemple à la figure 4. Le paramétrage des plages de silence et de la durée des émissions est effectué à priori par configuration, et n'a pas besoin d'évoluer dynamiquement. Par exemple, le radar en bande L 2 du système d'autoprotection peut être configuré pour émettre pendant 125 ms avec un intervalle de tolérance de +/-10% toutes les 125 ms avec un intervalle de tolérance de +/- 10%.

Il possible dans cette configuration de positionner des antennes 4 associées au radar en bande L 2 du système d'autoprotection aux places disponibles sur le porteur en ayant une zone de couverture optimale. Le paramétrage ainsi réalisé permet même de positionner les antennes 4 dans la zone de couverture des antennes de l'équipement de radionavigation DME 1.

La figure 5 illustre un exemple d'intégration sur un avion commercial d'un système d'autoprotection d'un radar bande L et d'un équipement de radionavigation DME. Il pourrait en être de même sur tout autre porteur comportant au moins un équipement de radionavigation DME ou tout autre équipement travaillant en bande L et dont le principe de fonctionnement est similaire, et au moins un système comportant un ou plusieurs radars en bande L. A titre d'exemple on peut citer un hélicoptère ou un drône.

La description de l'invention a été faite pour des équipements fonctionnant en bande L. Elle peut néanmoins s'appliquer à d'autres types d'équipement fonctionnant dans une même bande de fréquence.

## Revendications

1. Procédé de couplage électromagnétique entre au moins un équipement de radionavigation (1) émettant dans une bande de fréquence et au moins un radar (2) travaillant dans une même bande de fréquence **caractérisé en ce que** l'équipement de radionavigation (1) étant en fonctionnement, le radar (2) émet périodiquement dans tout ou partie de la bande de fréquence puis stoppe ses émissions, chaque émission :
• ayant un intervalle d'une durée donnée (dE),
• étant séparé de l'émission précédente par un intervalle de silence d'une durée donnée (dₛ).

2. Procédé selon la revendication 1 **caractérisé en que** l'instant de démarrage de chaque émission, la durée (dE) de chaque émission ainsi que la durée de chaque intervalle de silence (dₛ) sont définies a priori.

3. Procédé selon la revendication 1 **caractérisé en que** la bande de fréquence dans laquelle émettent l'équipement de radionavigation (1) et le radar (2) est la bande L.

4. Procédé selon la revendication 1 **caractérisé en que** l'équipement de radionavigation (1) est un équipement de mesure de distance (DME).

5. Procédé selon la revendication 4 **caractérisé en que** la durée d'émission (dE) du radar (2) est de 125 ms avec un intervalle de tolérance de +/- 10%.

6. Procédé selon la revendication 4 **caractérisé en que** la durée d'un silence (dₛ) du radar (2) est de 125 ms avec un intervalle de tolérance de +/- 10%.

7. Dispositif d'autoprotection et de radionavigation équipant un porteur **caractérisé en qu'**il comporte :
• au moins un équipement de radionavigation (1) émettant dans une bande de fréquence ;
• au moins un système d'autoprotection comportant un radar (2) émettant périodiquement dans tout ou partie d'une même bande de fréquence puis stoppant ses émissions, chaque émission :
o ayant un intervalle d'une durée donnée (dE),
o étant séparé de l'émission précédente par un intervalle de silence d'une durée donnée (dₛ).

8. Dispositif selon la revendication 7 **caractérisé en que** l'instant de démarrage de chaque émission, la durée (dE) de chaque émission ainsi que la durée de chaque intervalle de silence (dₛ) sont définies a priori.

9. Dispositif selon la revendication 7 **caractérisé en que** la bande de fréquence dans laquelle émettent l'équipement de radionavigation (1) et le radar (2) est la bande L.

10. Dispositif selon la revendication 7 **caractérisé en que** l'équipement de radionavigation (1) est un équipement de mesure de distance (DME).

11. Dispositif selon la revendication 10 **caractérisé en que** la durée d'émission (dE) du radar (2) est de 125 ms avec un intervalle de tolérance de +/- 10%.

12. Dispositif selon la revendication 10 **caractérisé en que** la durée d'un silence (dₛ) entre deux émissions du radar (2) est de 125 ms avec un intervalle de tolérance de +/- 10%.

13. Dispositif selon la revendication 7 **caractérisé en ce que** les antennes (4) du radar (2) sont positionnées sur le porteur dans la zone de couverture des antennes de l'équipement de radionavigation (1).

14. Dispositif selon la revendication 7 **caractérisé en ce que** le porteur est un avion.

15. Dispositif selon la revendication 7 **caractérisé en ce que** le porteur est un hélicoptère.

16. Dispositif selon la revendication 7 **caractérisé en ce que** le porteur est un drône.
